# EUROPÄISCHE PATENTSCHRIFT

(11) **EP 2 075 461 B1**
(45) Veröffentlichungstag und Bekanntmachung des Hinweises auf die Patenterteilung: **29.02.2012**
(21) Anmeldenummer: 07150468.2
(22) Anmeldetag: 28.12.2007
(51) Int. Cl.: F03D 5/04, F03D 5/06

(54) **Verfahren und System zur Umwandlung von in Horizontalströmungen enthaltener Bewegungsenergie in nutzbare mechanische Energie**
Method and system for conversion of kinetic energy contained in horizontal flows into usable mechanical energy
Procédé et système destinés à transformer l'énergie cinétique comprise dans des courants horizontaux en énergie mécanique utilisable

(43) Veröffentlichungstag der Anmeldung: 01.07.2009
(73) Patentinhaber: NTS Energie- und Transportsysteme GmbH, 10719 Berlin (DE)
(72) Erfinder: Uwe Ahrens, 10179 Berlin (DE)
(74) Vertreter: Raffay & Fleck

(56) Entgegenhaltungen:
- EP-A- 0 841 480
- EP-A1- 2 075 461
- DE-A1- 19 502 948
- NL-C1- 1 017 171
- US-A- 4 730 119
- US-A1- 2007 120 004

## Beschreibung

**Verfahren und System zur Umwandlung von in Horizontalströmungen enthaltener Bewegungsenergie in nutzbare mechanische Energie**

### Technisches Gebiet

Die Erfindung betrifft ein Verfahren sowie ein System zur Umwandlung von in in natürlich vorkommenden, über einem Grund angelagerten Fluiden auftretenden Horizontalströmungen enthaltener Bewegungsenergie in nutzbare mechanische Energie.

### Stand der Technik

Nahezu überall auf der Erde existieren in den wesentlichen vorkommenden Fluiden (die oberhalb der Erdoberfläche in der Atmosphäre enthaltene Luft, das in Gewässern angesammelte Süß- oder Salzwasser) natürlich vorkommende Horizontalströmungen. Unter Horizontalströmungen werden im Sinne dieser Erfindung solche Strömungen verstanden, die jedenfalls einen horizontalen Anteil besitzen. Beispiele für derartige Strömungen sind Winde in den verschiedenen Atmosphärenschichten bzw. Meeresströmungen oder sonstige Strömungen in Gewässern. Grundsätzlich sind diese Strömungen Speicher von großen Mengen Energie, deren Nutzung vermehrt angestrebt und in verschiedensten Umsetzungen bereits vorgenommen wird. Beispiele von technisch bereits realisierten Nutzungen derartiger Strömungen sind Tidekraftwerke, die den Strom der bei Flut anlaufenden bzw. bei Ebbe ablaufenden Wassermassen ausnutzen, um über Turbinen und daran angeordnete Generatoren Elektrizität zu erzeugen, oder Windkraftanlagen, deren durch über das Land wehenden Wind angetriebene Rotoren Windenergie zunächst in mechanische Energie und über daran angeschlossene Generatoren in elektrische Energie wandeln.

Ferner gibt es Lösungsansätze, bei denen für einen Transport an Schiffen drachenartige Flugkörper angeordnet werden, die über Halteseile mit dem Schiff verbunden sind und unter Ausnutzung der Windkraft den Vortrieb des Schiffes besorgen.

Die Nutzbarmachung der in derartigen Strömungen vorhandenen Energie hat gegenüber der Energiegewinnung aus fossilen Brennstoffen oder über die Nutzung nuklearer Prozesse den Vorteil, dass diese wesentlich umweltfreundlicher ist.

### Darstellung der Erfindung

In der bisher nicht veröffentlichten Europäischen Patentanmeldung Nr. 06014634.7 ist ein System angeben, welches mit entlang eines Umlaufs sich zumindest paarweise bewegenden Auftriebskörpern arbeitet, die je nach Ausrichtung zu der Strömung in ihrem Abstand zu dem Umlaufelement verkürzt bzw. verlängert werden. Mit einem solchen System können die in solchen Strömungen enthaltenen Energiemengen bereits sehr effektiv ausgenutzt werden. Allerdings kann hier eine weitere Optimierung vorgenommen werden, indem der Winkelbereich des Umlaufs, innerhalb dessen die Strömungsenergie nutzbare gemacht werden kann, vergrößert wird.

Diese Aufgabe wird durch die vorliegende Erfindung gelöst. Die Erfindung beruht dabei auf ähnlichen Überlegungen, wie die in der oben genannten bisher nicht veröffentlichten europäischen Patentanmeldung Nr. 06 014 634.7 unternommenen Erwägungen. Auch hier wird grundsätzlich die Tatsache ausgenutzt, dass in Strömungen über Grund abhängig von der Höhe unterschiedliche Strömungsgeschwindigkeiten vorherrschen. So sind z.B. typischerweise regional unterschiedlich beständige Winde gegeben, die z.B. in Europa im Wesentlichen und nahezu durchgehend aus westlichen Richtungen wehen, die in größeren Höhenlagen deutlich höhere Windgeschwindigkeiten erreichen als in Bodennähe. Dies wird nun ausgenutzt, indem im Verlaufe eines Umlaufs ein Auftriebskörper dort, wo er in einem Umlaufsinn eine positive Vortriebskraft erfahren kann, in solche Entfernungen zu dem Umlauf bzw. dem Umlaufelement verfahren wird, wo er starken Strömungskräften ausgesetzt ist, im Beispiel des Windes also hohe Windgeschwindigkeiten erfährt. In solchen Bereichen des Umlaufs, in denen ein solchermaßen "positiver Vortrieb" nicht realisiert werden kann, wird der Abstand des Auftriebskörpers zum Umlaufelement so verstellt, dass er in eine Horizontalschicht gerät, die geringere Strömungsgeschwindigkeiten aufweist.

Gegenüber der in der oben genannten nicht veröffentlichten europäischen Patentanmeldung beschrieben und beanspruchten Erfindung gibt die vorliegende Erfindung jedoch eine wesentliche Veränderung vor. Während in der früheren Anmeldung der Auftriebskörper nicht näher beschrieben wird, und bei einer Annahme als reiner Widerstandsläufer tatsächlich im Wesentlichen nur entlang der Hälfte des Umlaufs mit Energiegewinn betrieben werden kann, ist nun vorgesehen, dass der Auftriebskörper in seiner Ausrichtung zur Strömung so eingestellt wird, dass er auch bei quer zur Strömung liegender Laufrichtung des Umlaufelementes noch eine Vortriebskraft auf das Halteseil bzw. die Haltekette in Richtung der Laufrichtung des Umlaufelementes aufbringen kann. Hierzu kann der Auftriebskörper z.B. nach Art eines Drachens ausgebildet sein, aber auch in anderer Art und Weise in Form eines Flugkörpers mit aerodynamisch wirksamen Flügeln oder dgl. "aktiver" Ausgestaltung. Ähnlich wie ein Segelboot kann der Auftriebskörper dabei sogar entgegen einer schräg von vorn anlaufenden Strömung "kreuzen" und auch in solcher Situation noch einen Energiegewinn beitragen. Auf diese Weise kann der für eine positive Energieumwandlung nutzbare Winkelbereich des Umlaufs von maximal 180° bei einem reinen Widerstandsläufer deutlich erhöht werden auf Winkelbereiche von bis zu etwa 270°. Dabei ist es bei der Gestaltung gemäß der vorliegenden Erfindung anders als bei dem vorbekannten Aufbau nicht erforderlich, dass jedenfalls zwei Auftriebskörper vorhanden sind. Vielmehr kann die Strecke, entlang derer der Auftriebskörper nicht Energie gewinnend in der Strömung geführt werden muss, unter Energieaufwand überwunden werden, indem der Auftriebskörper dort z.B. mittels eingespeister elektrischer Energie aktiv gezogen wird, bis er wieder in einen Bereich gelangt, in dem er aufgrund der Strömung Zug auf die Haltekette bzw. das Halteseil ausüben und insoweit positiv Energie umsetzen kann.

Dort, wo die Richtung der horizontalen Strömungen abhängig von der Höhe variieren, kann eine weitere Optimierung des Ertrages an umgewandelter mechanischer Energie erreicht werden, wenn angepasst an die unterschiedlichen Richtungen der Auftriebskörper während seines Umlaufs in unterschiedliche Höhenlagen verfahren wird.

Grundsätzlich kann die Veränderung des Abstandes zwischen Umlaufelement und Auftriebskörper auf unterschiedlichste Art und Weise erfolgen, wobei es sich jedoch anbietet, hierfür das Halteseil bzw. die Haltekette zu verwenden. Diese kann in ihrer Länge verstellt werden durch Auf- und Abwickeln. Es kann das Halteseil bzw. die Haltekette auch an zwei voneinander entfernbaren Punkten an einem Umlaufelement festgelegt und dazwischen zu dem Auftriebskörper geführt sein. Durch eine Vergrößerung des Abstandes der beiden an dem Umlaufkörper festgelegten Enden des Halteelementes wird der Auftriebskörper näher zu dem Umlaufelement hingezogen, bei Verkleinerung dieses Abstandes vergrößert sich die Entfernung vom Auftriebskörper zum Umlaufelement. Durch Einsatz eines Flaschenzuges kann dann der Effekt noch vergrößert werden, indem bei einem Auseinanderlaufen der beiden Enden des Halteseils bzw. der Haltekette an dem Umlaufelement eine ungleich stärkere Verkürzung des Abstandes erreicht wird. Erreicht werden kann dies insbesondere z.B. dadurch, dass ein in Umlaufrichtung gesehen hinteres Befestigungsteil zum Einholen des Auftriebskörpers zunächst angehalten wird, während ein vorderes Teil sich weiter mit dem Umlaufelement bewegt. Dadurch wird die Bewegungsenergie, die in dem System aufgrund der in dem Fluid vorhandenen Strömung befindlich ist, genutzt, um den Auftriebskörper einzuholen. Durch ein Lösen des in Umlaufrichtung gesehen hinteren Elementes wird der Abstand zwischen den beiden Enden des Halteseils bzw. der Haltekette wieder verkürzt und der Auftriebskörper gleitet nach oben. Die hierfür erforderliche Kraft wird durch den Auftrieb des Körpers selbst aufgebracht.

Um den Energieaufwand, der für ein Weiterführen des Auftriebskörpers durch einen solchen Bereich, in dem aus der Strömung keine in Richtung des Umlaufsinnes des Umlaufelementes weisenden Kräfte mehr aufgebracht werden können, möglichst niedrig zu halten, ist es von Vorteil, wenn der Angriffsquerschnitt des Auftriebskörpers in einem solchen Bereich minimiert wird.

Auch wenn grundsätzlich ein einziger Auftriebskörper an einem Umlaufelement zur Realisierung der Erfindung genügt, kann natürlich mit einer Mehrzahl von Auftriebskörpern ein höheres Maß an Energieumwandlung erzielt werden.

Weiterhin können, um bei plötzlichen Strömungsveränderungen, z.B. Windböen bei Einsatz im Wind, ein Abreißen der Auftriebskörper zu vermeiden im System der Befestigung des Auftriebskörpers mittels des Halteseils bzw. der Haltekette eine oder mehrere Kupplungselement mit sogenannten Rutschkupplungen oder andere Mittel zum kurzzeitigen Auffangen einer starken Kraft vorgesehen sein.

Der Bahnverlauf des geschlossenen Umlaufs kann kreisförmig, oval oder in jeder anderen beliebigen kontinuierlichen Form gebildet sein. Je nach den tatsächlich vorherrschenden Strömungsverhältnissen können auch im Wesentlichen dreieckige oder vergleichbare Bahnverläufe gewählt werden.

Grundsätzlich kann das erfindungsgemäße Verfahren genutzt werden bzw. das erfindungsgemäße System verwendet werden, um Güter oder Personen entlang einer Strecke des Umlaufs zu befördern.

Derzeit besonders bevorzugt soll das System bzw. das Verfahren allerdings zur Gewinnung von elektrischer Energie eingesetzt werden. Dabei hat das Verfahren bzw. das System besondere Vorteile. Durch die Möglichkeit, die Geschwindigkeit des Umlaufelementes entlang des geschlossenen Umlaufs einzustellen, kann durch ein Erhöhen der Laufgeschwindigkeit bei stärkeren Strömungen die auf den Halteseilen bzw. Halteketten lastende Kraft reduziert werden. Zum anderen kann bei Gewinnung elektrischer Energie die Stromproduktion an die gerade nachgefragte Last angepasst werden.

Durch die Wahl von in ihrer Ausrichtung gegenüber der Strömungsrichtung einstellbaren Auftriebskörpern können diese ggf. sogar ohne ein gesondertes Auftriebsmittel wie etwa ein gegenüber Luft leichteres Gas betrieben werden, auch wenn ein solches Auftriebsmittel auch bei den erfindungsgemäß vorgesehenen, in ihrer Ausrichtung zur Strömungsrichtung einstellbaren Auftriebskörpern verwendet werden kann. Auftriebskörper ohne gesondertes Auftriebsmittel haben den Vorteil, dass sie grundsätzlich wartungsärmer sind. Anders als z.B. bei gasgefüllten Auftriebskörpern, bei denen periodisch Auftriebsgas nachgefüllt werden muss, entfällt eine solche Wartung bei Auftriebskörpern ohne gesondertes Auftriebsmittel.

Bei einem Betrieb im Wind können z.B. ohne Auftriebsmittel gebildete, drachenartig gebaute Auftriebskörper zunächst durch ein motorisches Antreiben des Systems angezogen und so in größere Höhen verbracht werden, bis sie dort von einer Windströmung erfasst werden. So kann das System ohne aktive Auftriebselemente auch bei nahezu null Strömung in der Nähe des Grundes bzw. in der Nähe des geschlossenen Umlaufs gestartet werden. Ferner kann das System auch bei einer für einen Umlauf der auftriebsmittelfreien Auftriebskörper vorübergehend nicht ausreichenden Strömungsgeschwindigkeit (z.B. Windgeschwindigkeit) durch einen im Energieaufwand vergleichbar niedrigen "Schleppbetrieb", in dem die Auftriebskörper motorisch angezogen werden, im Umlauf und die Auftriebskörper in einer bodenfernen Höhenlage gehalten werden. Dies ist insbesondere wichtig, da ein Abriss der den Auftriebskörper in seiner Höhenlage haltenden Strömung würde dieser ansonsten abstürzen und z.B. durch einen Aufprall auf Grund schaden nehmen oder durch Schmutz oder Wasser (bei Betrieb über Wasser) verunreinigt und nicht mehr ohne weiteres startfähig sein.

Gegenüber herkömmlichen modernen Windkraftanlagen, die eine Einschaltgeschwindigkeit von zumindest fünf Meter pro Sekunde benötigen kann ein erfindungsgemäßes System bei wesentlich geringeren Windgeschwindigkeiten (ab Windgeschwindigkeiten von zwei Meter pro Sekunde) Energie gewinnend betrieben werden. Dies liegt an den deutlich geringeren Reibungs- und sonstigen Anlaufverlusten, die das erfindungsgemäße System gegenüber modernen Windkraftanlagen aufweist. Bei temporär unter diesen Wert fallenden Windgeschwindigkeiten kann das System in den oben beschriebenen Schleppbetrieb wechseln, um bei erneut steigender Windgeschwindigkeit wieder Energie gewinnend zu arbeiten.

Nach derzeitigen Berechnungen wird davon ausgegangen, dass das erfindungsgemäße System in einer Ausgestaltung zur Stromerzeugung unter Ausnutzung von Wind etwa zu 90% der Zeit Strom erzeugen kann, da die erforderliche Anlaufwindgeschwindigkeit von zwei Meter pro Sekunde in den interessanten Regionen in der Regel in dieser Häufigkeit gegeben ist.

Auch wenn insbesondere zuletzt stark auf einen Betrieb eines erfindungsgemäßen Systems als Windenergieanlage abgestellt wurde, ist dies nicht die einzige Anwendungsform. Grundsätzlich ist es denkbar, dieses Prinzip auch in anderen kontinuierlichen Strömungen, z.B. in Meeresströmen anzuwenden. Auch sind andere Anwendungen als die Energiegewinnung, z.B. Anwendungen zum Personen- oder Gütertransport im Rahmen der Erfindung möglich.

**Kurze Beschreibung der Abbildungen der Zeichnungen**

Weitere Merkmale und Vorteile der Erfindung ergeben sich aus der nachfolgenden Beschreibung eines Ausführungsbeispiels anhand der beigefügten Figuren. Dabei zeigen:

Figur 1 ein schematisches Diagramm, welches das Verhältnis der Windgeschwindigkeit in Abhängigkeit von der Höhe über Grund zeigt;

Figur 2 in einer schematischen Darstellung ein grundsätzlich auch bei dieser Erfindung genutztes System eines geschlossenen Umlaufs, jedoch mit aerostatischen Auftriebskörpern;

Figur 3a eine weitere Darstellung mit aerostatischen Auftriebskörpern mit veränderbaren Angriffsquerschnitt;

Figur 3b schematisch einen Winkelbereich, innerhalb dessen bei einem kreisförmigen Umlauf bei aus einer Richtung vorherrschender Strömung positive Energieumwandlung betrieben werden kann;

Figur 4a schematisch eine Darstellung eines erfindungsgemäßen Systems mit nach dem aerodynamischen Prinzip wirkenden Auftriebskörpern;

Figur 4b schematisch eine Darstellung des Winkelbereichs, innerhalb dessen bei einem kreisförmigen Umlauf bei konstanter Strömungsrichtung positive Energieumwandlung mit einem nach dem aerodynamischen Prinzip wirkenden Flugkörper erzielt werden kann und

Figur 5 schematisch die Ausnutzung unterschiedlicher Strömungsrichtungen in unterschiedlichen Höhenlagen zur weiteren Optimierung eines erfindungsgemäßen Systems.

### Weg(e) zur Ausführung der Erfindung

In den Figuren ist schematisch die Erfindung anhand eines möglichen Ausführungsbeispiels und Vergleiches mit dem in der bisher unveröffentlichten europäischen Patentanmeldung Nr. 06 014 634.7 beschriebenen Systems skizziert.

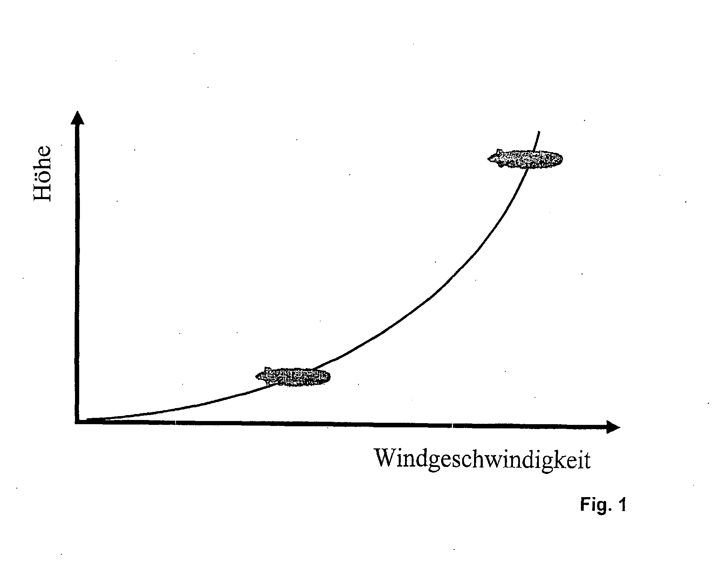

In Figur 1 ist zunächst anhand des Windes schematisch dargestellt, wie die Windgeschwindigkeit mit der Entfernung vom Boden (Grund), also mit der Höhe zunimmt. Als beispielhafte Auftriebskörper sind hier Luftschiffe auf verschiedenen Höhenstufen eingetragen, um zu verdeutlichen, dass diese unterschiedliche Windgeschwindigkeiten erfahren.

Das sich aus der Darstellung in Figur 1 ergebene Prinzip benutzt die Erfindung zur Umsetzung von in dem Wind (Luftströmung) enthaltener Bewegungsenergie in nutzbare mechanische Energie.

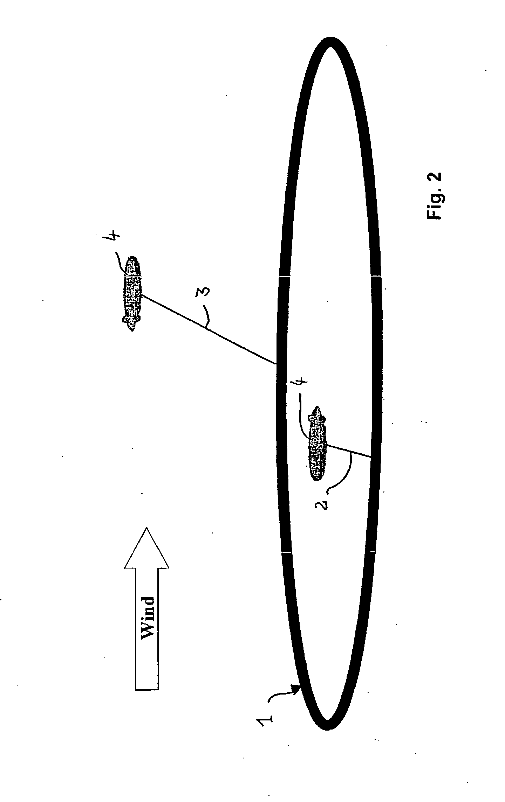

Ein aus der oben genannten unveröffentlichten europäischen Patentanmeldung grundsätzlich vorbekanntes System für eine solche Energieumsetzung, auf das auch diese Erfindung aufbaut, ist in Figur 2 schematisch dargestellt. Das System enthält als wesentlichen Bestandteil zumindest ein entlang eines geschlossenen Umlaufs geführtes Umlaufelement 1. Dieses Umlaufelement 1 kann z.B. ein umlaufendes, geschlossenes Seil oder eine solche Kette sein. Gleichsam kann das Umlaufelement 1 auch ein auf einer Schiene rollender Wagen sein. An dem Umlaufelement 1 sind in dem hier gezeigten Ausführungsbeispiel zwei an Halteseilen 2 bzw. 3 befestigte Auftriebskörper in Form von Luftschiffen 4 angeordnet. Bei diesen Luftschiffen 4 handelt es sich um so genannte Aerostate, die im Wesentlichen nur bei einer überwiegend von hinten wirkenden Strömung einen Vortrieb erfahren und damit Energie umsetzen können.

Die Wirkweise des in Figur 2 gezeigten Systems beruht darauf, dass in der größeren Höhenlage auf dem an dem längeren Halteseil 3 gehaltenen Luftschiff 4 größere Kräfte in Richtung des Umlaufelementes 1 wirken als die dem Umlauf des an dem kürzeren Halteseil 2 gehaltenen Luftschiffes 4 in entgegen gesetzter Richtung. An Punkten, bei denen sich die Richtung des Umlaufelementes 1 in Bezug auf die Windrichtung umkehrt, werden die Längen der Halteseile 2 und 3 so verändert, dass das Halteseil 2 nunmehr die größere Länge aufweist, das Halteseil 3 verkürzt ist und so weiterhin ein Nettogewinn an Energie über die Differenz der erfahrenen Kraft in den unterschiedlichen Höhenlagen erreicht werden kann.

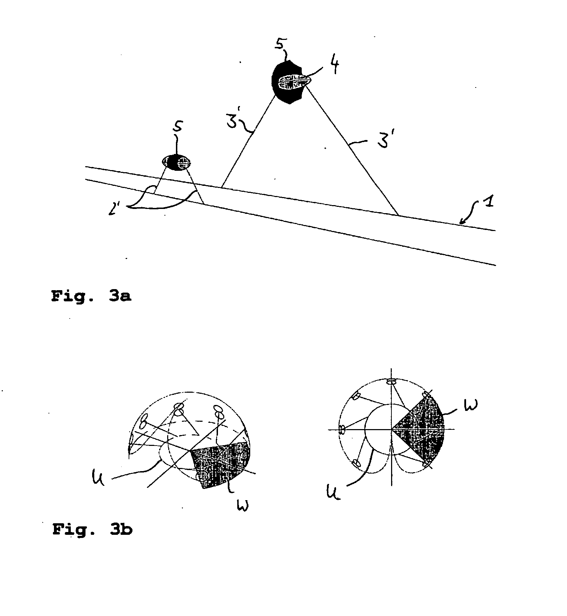

Verbessert werden kann dieses System noch dadurch, dass wie in Figur 3a dargestellt an den Luftschiffen 4 ein zusätzliches Segel 5 angeordnet wird, welches bei Bewegung in Richtung des Windes (in der Figur 3a nach links hinten) aufgeklappt und bei einer Rückführung entgegen der Windrichtung eingeholt wird. Insoweit kommt zusätzlich zu dem durch den Höhenunterschied gegebenen Kraftunterschied noch ein weiterer Kraftunterschied durch die unterschiedliche Angriffsfläche bzw. den Angriffsquerschnitt.

In Figur 3a ist eine andere Konstruktion der Halteseile 2' und 3' dargestellt. Hier sind jeweils zwei Halteseile zu dem Umlaufelement 1 geführt und dort verankert, bzw. es ist ein Halteseil vorgesehen, welches z.B. durch eine Öse an dem Luftschiff 4 geführt und mit beiden freien Enden an dem Umlaufelement 1 angeschlagen ist.

In Figur 3b ist schematisch dargestellt, wie entlang eines kreisförmigen Umlaufs U mit einem solchen aerostatisch wirkenden Flugkörper, der im Wesentlichen nur bei starker Anströmung von hinten Energiegewinnung ermöglicht, nur in einem stark eingeschränkten Winkelbereich W (grau hinterlegt) tatsächlich Energie positiv umgesetzt werden kann.

Hier setzt nun im eigentlichen Sinn die Erfindung an.

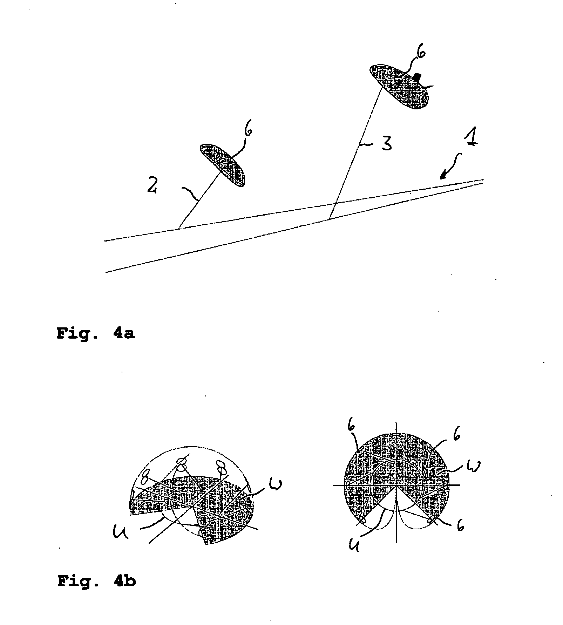

Dazu wird anstelle eines aerostatisch wirkenden Luftschiffes 4 an das Ende der Halteseile 2 bzw. 3 jeweils ein nach dem aerodynamischen Prinzip arbeitender Auftriebskörper, hier in Form eines Drachens 6 angeordnet. Dieser kann durch entsprechende Steuermaßnahmen, z.B. über Steuerseile, so gegenüber der Strömung angestellt werden, dass er auch bei seitlich einwirkender Strömung, sogar bei schräg von vorn wirkender Strömung, z.B. durch "Kreuzen", noch einen in Richtung des Umlaufsinnes des Umlaufelementes 1 wirkende Kraft zu gewinnen vermag. Entsprechend ergibt sich ein gegenüber der in den Figuren 3a und 3b gezeigten Ausgestaltung deutlich vergrößerter Wirkbereich W entlang des kreisförmigen Umlaufs U, der in Figur 4b grau schraffiert dargestellt ist.

Grundsätzlich benötigt eine mit einem nach dem aerodynamischen Prinzip arbeitenden Auftriebskörper ausgestattete Anlage bzw. ein solches System nicht mehrere Auftriebskörper, sondern kann mit einem einzigen an einem Umlaufelement angeordneten Auftriebskörper arbeiten. Über den kleinen, hier nicht grau schraffierten Bereich außerhalb des Wirkbereiches W, könnte der Auftriebskörper z.B. durch Aufwendung elektrischer Energie oder dergleichen hinweg geschleppt werden. Er würde immer noch entlang des weiteren Umlaufs über den großen Wirkbereich W einen Überschuss an Energie erzeugen.

Natürlich wird das System aber effizienter, wenn, wie in Figur 4b angedeutet, mehrere Auftriebskörper in Gestalt der Drachen 6 verteilt auf dem System angeordnet und mit entweder einem gemeinsamen oder separaten Umlaufelementen 1 verbunden sind.

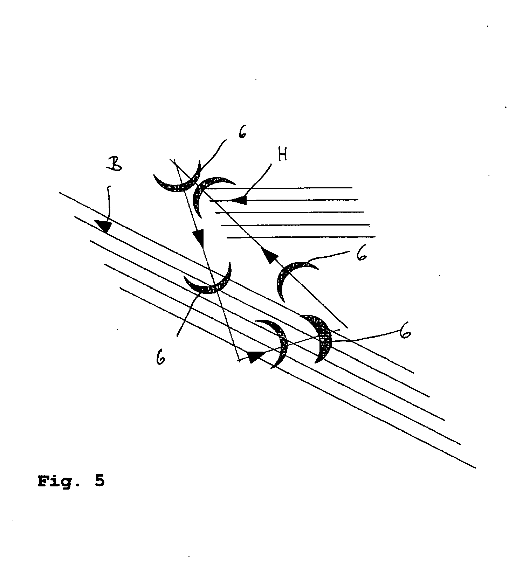

Eine zusätzliche Erhöhung des wirksamen Bereiches, innerhalb dessen mit Hilfe des nach dem aerodynamischen Prinzip arbeitenden Auftriebskörpers mechanische Energie gewonnen werden kann, ergibt sich bei einer optimierten Ausnutzung in unterschiedlichen Höhen unterschiedlich gerichteten Strömungsverhältnissen. Häufig ist es nämlich, z.B. bei Wind über Land so, dass in der Nähe des Grundes andere Strömungsrichtungen vorherrschen als weiter vom Grund entfernt. Dies ist in Figur 5 veranschaulicht. Mit B ist hier die Windrichtung nahe dem Grund, also in der Nähe des Bodens, gekennzeichnet, mit H die Richtung des Windes in einer höheren Schicht. Abhängig von den Windrichtungen B, H in den einzelnen Höhenlagen und den sonstigen Gegebenheiten im Gelände kann bei einer Aufstellung des Systems zur Ausnutzung der Windenergie dies z.B. genutzt werden, um die Form des geschlossenen Umlaufs zu optimieren, in diesem Beispiel eine Dreiecksform, aber auch um die Auftriebskörper in Form der nach dem aerodynamischen Prinzip arbeitenden Drachen 6 in unterschiedliche Höhen zu bringen. So kann ein Auftriebskörper, der z.B. in einer höheren Höhe nur noch mit 30° am Wind gestellt ist, weiter heruntergefahren werden in tiefere Schichten, wo er dann z.B. 58° am Wind steht und damit weiter Vortrieb in Richtung der Umlaufrichtung des Umlaufelementes 1 erzeugen kann.

Durch eine solche Optimierungsmaßnahme kann der Wirkbereich W entlang des Umlaufs eines erfindungsgemäßen Systems noch weiter verbessert werden.

Aus der obigen Beschreibung eines Ausführungsbeispiels werden die Vorteile der Erfindung noch einmal besonders deutlich. Ein erfindungsgemäßes System bzw. des Verfahrens lässt sich insbesondere nutzen, um aus natürlichen Strömungen, z.B. konstanten Winden, auf besonders effiziente und ökologisch vorteilhafte Weise elektrische Energie zu gewinnen. Jedoch ist eine Anwendung des erfindungsgemäßen Systems auf die Gewinnung elektrischer Energie nicht beschränkt. Das System bzw. das Verfahren können auch eingesetzt werden, um Transporte vorzunehmen von Gütern wie Personen.

Das Ausführungsbeispiel soll den Umfang der Erfindung nicht beschränken, deren Gegenstand nachfolgend in den Ansprüchen bestimmt wird.

**Bezugszeichenliste**

1 Umlaufelement

2, 2' Halteseil

3, 3' Halteseil

4 Luftschiff

5 Segel

6 Drachen

B Windrichtung

H Windrichtung

U Umlauf

W Winkelbereich

## Patentansprüche

1. Verfahren zur Umwandlung von in in natürlich vorkommenden, über einem Grund angelagerten Fluiden auftretenden Horizontalströmungen enthaltener Bewegungsenergie in nutzbare mechanische Energie, wobei wenigstens ein in einem geschlossenen Umlauf (U) geführtes, im wesentlichen horizontal über dem Grund angeordnetes Umlaufelement (1) vorgesehen ist, in dessen Umlauf die Bewegungsenergie der Horizontalströmung umgewandelt wird und an welchem mittels wenigstens eines Halteseils (2, 3) bzw. mittels einer Haltekette wenigstens ein einen Angriffsquerschnitt für die Strömung aufweisender Auftriebskörper (6) befestigt ist, wobei in einem Abschnitt des geschlossenen Umlaufs (U), in dem über die an dem Angriffsquerschnitt angreifende Strömung eine in einem Umlaufsinn gerichtete Vortriebskraft auf den Auftriebskörper (6) wirkt, der Abstand zwischen dem Umlaufelement (1) und dem Auftriebskörper (6) größer eingestellt wird als in einem Abschnitt des geschlossenen Umlaufs (U), in dem über die an dem Angriffsquerschnitt angreifende Strömung keine in dem Umlaufsinn gerichtete Vortriebskraft auf den Auftriebskörper (6) wirkt, und wobei der Auftriebskörper (6) während des Umlaufs in seiner Ausrichtung zur Strömung so eingestellt wird, dass er auch bei einer quer zu der momentanen Umlaufrichtung des Umlaufelementes (1) wirkenden Strömung eine in Umlaufrichtung wirkende Kraftkomponente erfährt und über das wenigstens eine Halteseil (2, 3) auf das Umlaufelement (1) überträgt.

2. Verfahren nach Anspruch 1, **dadurch gekennzeichnet, dass** ferner für eine Vergrößerung des Sektors (W) des Umlaufs, in welchem eine Energieumwandlung in mechanische Energie erfolgen kann, der wenigstens eine Auftriebskörper (6) in unterschiedliche Höhenlagen verfahren wird.

3. Verfahren nach einem der vorhergehenden Ansprüche, **dadurch gekennzeichnet, dass** zum Verändern des Abstandes des Auftriebskörpers (6) von dem Umlaufelement (1) das Halteseil (2, 3) bzw. die Haltekette verstellt wird.

4. Verfahren nach einem der vorhergehenden Ansprüche, **dadurch gekennzeichnet, dass** der Angriffsquerschnitt des Auftriebskörpers (6) in dem Abschnitt des Umlaufs (U), in welchem über die an dem Angriffsquerschnitt angreifende Strömung keine in dem Umlaufsinn gerichtete Vortriebskraft auf den Auftriebskörper (6) wirkt, minimiert wird.

5. Verfahren nach einem der vorhergehenden Ansprüche, **dadurch gekennzeichnet, dass** mehrere an einem gemeinsamen oder an mehreren entlang des geschlossenen Umlaufs (U) bewegbaren Umlauflaufelementen (1) beabstandet festgelegte und individuell hinsichtlich der des Abstandes zu dem Umlaufelement (1) sowie in ihrer Ausrichtung zur Strömung einstellbare Auftriebskörper (6) verwendet werden.

6. System zur Umwandlung von in in natürlich vorkommenden, über einem Grund angelagerten Fluiden auftretenden Horizontalströmungen enthaltener Bewegungsenergie in nutzbare mechanische Energie mit wenigstens einem entlang eines geschlossenen Umlaufs (U) geführt bewegbaren Umlaufelement (1), an dem über wenigstens ein Halteseil (2, 3) oder eine Haltekette wenigstens ein Auftriebskörper (6) festgelegt ist, wobei eine Einrichtung zum Verstellen des Abstandes zwischen dem Auftriebskörper (6) und dem Umlaufelement (1) abhängig von einer Lage des Auftriebskörpers (6) relativ zur Strömung vorgesehen ist und wobei ferner eine Einstelleinrichtung zum Einstellen der Ausrichtung des Auftriebskörpers (6) relativ zur Strömung vorgesehen ist.

7. System nach Anspruch 6, **dadurch gekennzeichnet, dass** zum Verändern des Abstandes des Auftriebskörpers (6) zu dem Umlaufelement (1) die Halteseile (2, 3) bzw. Halteketten einstellbar sind.

8. System nach einem der Ansprüche 6 oder 7, **dadurch gekennzeichnet, dass** der Auftriebskörper (6) in seinem Angriffsquerschnitt veränderlich ausgebildet ist.

9. System nach einem der Ansprüche 6 bis 8, **dadurch gekennzeichnet, dass** mehrere über Halteseile (2, 3) bzw. -ketten an einem oder mehreren Umlaufelementen (1) festgelegte, voneinander beabstandete Auftriebkörper (6) vorgesehen sind.

10. Verwendung eines Systems nach einem der Ansprüche 6 bis 9 zum Transport von Gütern und/oder Personen.

11. Verwendung eines Systems nach einem der Ansprüche 6 bis 9 zur Gewinnung von elektrischer Energie.

## Claims

1. A device for converting the kinetic energy, contained in horizontal currents present in fluids deposited on a soil and naturally occurring, into useful mechanical energy, **characterised in that** at least one revolving element (1) is arranged substantially horizontally above the ground and in a closed circuit (U), in whose circuit the kinetic energy of the horizontal current is converted and on which a buoyancy body (6) having an cross-section of impact for the current to act upon, is fixed by means of at least one retaining cable (2, 3) or by means of a safety chain, whereas in a portion of the closed circuit (U), in which a propulsion force rotating in a circumferential direction acts upon the buoyancy body (6) by means of the flow applied upon the attacking cross section, the distance between the revolving element (1) and the buoyancy body (6) is set larger than in a section of the closed circuit (U) in which no propulsion force rotating in the circumferential direction is acting on the buoyancy body (6) by means of the flow applied upon the attacking cross section, and wherein the orientation of buoyancy body (6) when rotating is adjusted with respect to the flow so as to receive a force component acting in a circumferential direction even with a flow acting crosswise to the current direction of rotation of the rotating element (1) and to transmit it via the at least one retaining cable (2, 3) to the rotating element (1).

2. The method of claim 1, **characterised in that** moreover to increase the sector (W) of the circuit in which energy can be converted into mechanical energy, said at least one buoyancy body (6) can be moved to different height positions.

3. A method according to any of the preceding claims, **characterised in that** to modify the distance of the buoyancy body (6) to the rotating element (1), the retaining cable (2, 3) resp. the safety chain can be adjusted.

4. A method according to any of the preceding claims, **characterised in that** the attacking cross section of the buoyancy body (6) in the portion of the circuit (U) in which no propulsion force rotating in the circumferential direction is acting on the buoyancy body (6) by means of the flow applied upon the attacking cross section, is minimised.

5. A method according to any of the preceding claims, **characterised in that** several buoyancy bodies (6) are used, said bodies being fixed on a single or several rotating elements mobile along a closed circuit (U) and whose distance to the rotating element (1) as well as whose orientation to the flow can be adjusted individually.

6. A system for converting the kinetic energy, contained in horizontal currents present in fluids deposited on a soil and naturally occurring, into useful mechanical energy, using at least one mobile rotating element (1) guided along a closed circuit (U), on which at least buoyancy body (6) is fixed via at least one retaining cable (2, 3) or a safety chain, wherein a device for adjusting the distance between the buoyancy body (6) and the rotating element (1) depending on a position of the buoyancy body (6) with respect to the flow is provided and wherein moreover an adjustment device for adjusting the orientation of the buoyancy body (6) with respect to the flow is provided.

7. The system of claim 6, **characterised in that** to modify the distance of the buoyancy body (6) to the rotating element (1), the retaining cables (2, 3) or the safety chains are adjustable.

8. The system according to one of the claims 6 or 7, **characterised in that** the design of the attacking cross-section of the buoyancy body (6) can be varied.

9. The system according to one of the claims 6 to 8, **characterised in that** several buoyancy bodies (6) are provided, spaced apart from one other, fixed via retaining cables (2, 3) or safety chains on one or several rotating elements (1).

10. An application of a system according to one of the claims 6 to 9 for the transport of goods and/or people.

11. An application of a system according to one of the claims 6 to 9 for the production of electrical energy.

## Revendications

1. Procédé de conversion d'énergie cinétique contenue dans des courants horizontaux survenant dans des fluides accumulés au-dessus d'un sol que l'on trouve à l'état naturel, en énergie mécanique utile, au moins un élément rotatif (1) étant prévu principalement horizontal au-dessus du sol, guidé en circuit fermé (U), dans le circuit duquel l'énergie cinétique du courant horizontal est convertie sur lequel est fixé un flotteur (6) présentant au moins un profil d'attaque pour le courant, à l'aide d'au moins un câble de retenue (2, 3) ou à l'aide d'une chaîne de retenue, dans lequel dans une section du circuit fermé (U), dans laquelle s'exerce sur le flotteur (6) une force de propulsion dirigée dans le sens de rotation par le biais du courant attaquant le profil d'attaque, la distance entre l'élément rotatif (1) et le flotteur (6) est réglée sur une valeur supérieure par rapport à une section du circuit fermé (U), dans laquelle ne s'exerce sur le flotteur (6) aucune force de propulsion dirigée dans le sens de rotation par le biais du courant attaquant le profil d'attaque, et où l'orientation du flotteur est réglée par rapport au courant de telle sorte qu'il rencontre lors d'un courant agissant perpendiculairement au sens de rotation du moment de l'élément rotatif (1) une composante de force exercée dans le sens de rotation qu'il va transférer à l'élément rotatif (1) par le biais dudit au moins un câble de retenue (2,3).

2. Procédé selon la revendication 1, **caractérisé en ce que** de plus l'on peut régler la position en hauteur d'au moins un flotteur (6) est pour agrandir le secteur (W) de rotation dans lequel l'énergie est convertie en en énergie mécanique.

3. Procédé selon l'une quelconque des revendications précédentes, **caractérisé en ce que** pour modifier la distance du flotteur (6) par rapport à l'élément rotatif (1) on peut ajuster le câble de retenue (2, 3) ou la chaîne de retenue.

4. Procédé selon l'une quelconque des revendications précédentes, **caractérisé en ce que** l'on réduit le profil d'attaque du flotteur (6) dans la partie rotation (U) dans laquelle ne s'exerce sur le flotteur (6) aucune force de propulsion dirigée dans le sens de rotation par le biais du courant attaquant le profil d'attaque.

5. Procédé selon l'une quelconque des revendications précédentes, **caractérisé en ce** l'on utilise plusieurs flotteurs (6) dont la distance par rapport à l'élément rotatif (1) est réglable individuellement et dont l'orientation est réglable par rapport au courant, flotteurs espacés au niveau d'un élément rotatif mobile (1) commun ou au niveau de plusieurs éléments rotatifs (1) mobiles le long du circuit fermé (U).

6. Système de conversion d'énergie cinétique contenue dans des courants horizontaux survenant dans des fluides accumulés au-dessus d'un sol que l'on trouve à l'état naturel, en énergie mécanique utile, avec au moins un élément rotatif (1) mobile guidé le long d'un circuit fermé (U) au niveau duquel un flotteur (6) est fixé à l'aide d'au moins un câble de retenue (2, 3) ou d'une chaîne de retenue, dans lequel est prévu un dispositif de réglage de distance entre le flotteur (6) et l'élément rotatif (1) en fonction d'une position du flotteur (6) et par rapport au courant et dans lequel de plus un dispositif de réglage est prévu pour régler l'orientation du flotteur par rapport au courant.

7. Système selon la revendication 6, **caractérisé en ce que** pour modifier la distance du flotteur (6) par rapport à l'élément rotatif (1) on peut ajuster les câbles de retenue (2, 3) ou les chaînes de retenue.

8. Système selon l'une des revendications 6 ou 7, **caractérisé en ce que** la conception du profil d'attaque du flotteur (6) est parfaitement modifiable.

9. Système selon l'une des revendications 6 à 8, **caractérisé en ce que** plusieurs flotteurs espacés les uns des autres, sont prévus, fixés par des câbles (2, 3) ou des chaînes de retenue au niveau d'un ou de plusieurs éléments rotatifs (1).

10. Utilisation d'un système selon l'une quelconque des revendications 6 à 9 pour le transport de marchandises et/ou de personnes.

11. Utilisation d'un système selon l'une quelconque des revendications 6 à 9 pour la production d'énergie électrique.
